(19) Europäisches Patentamt
European Patent Office
Office européen des brevets

(11) **EP 2 752 814 B1**

(12) **EUROPEAN PATENT SPECIFICATION**

(45) Date of publication and mention
of the grant of the patent:
**06.03.2019 Bulletin 2019/10**

(51) Int Cl.:
*G06T 5/00* (2006.01)     *G06T 5/20* (2006.01)

(21) Application number: **13198350.4**

(22) Date of filing: **19.12.2013**

(54) **Image processing apparatus**

Bildverarbeitungsvorrichtung

Appareil de traitement d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2012 JP 2012289044
23.10.2013 JP 2013220169**

(43) Date of publication of application:
**09.07.2014 Bulletin 2014/28**

(73) Proprietor: **Ricoh Company, Ltd.
Tokyo 143-8555 (JP)**

(72) Inventor: **Kasahara, Ryosuke
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
EP-A2- 2 362 345     JP-A- 2012 147 281
US-A1- 2007 188 633     US-A1- 2007 211 154

- AIQI WANG ET AL: "A Simple Method of Radial Distortion Correction with Centre of Distortion Estimation", JOURNAL OF MATHEMATICAL IMAGING AND VISION, KLUWER ACADEMIC PUBLISHERS, BO, vol. 35, no. 3, 7 July 2009 (2009-07-07), pages 165-172, XP019730671, ISSN: 1573-7683, DOI: 10.1007/S10851-009-0162-1
- G. Zachmann: "Informatik II Precomputation/Preprocessing", , 27 June 2011 (2011-06-27), pages 1-24, XP055339245, Retrieved from the Internet: URL:http://zach.in.tu-clausthal.de/teaching/info2_11/folien/16_precomputation.pdf [retrieved on 2017-01-26]

**Description**

BACKGROUND OF THE INVENTION

1. Field of the Invention

The present invention relates to an image processing apparatus.

2. Description of the Related Art

Examples of high-precision image processing systems include stereo cameras. In such image processing systems, optical distortion may occur due to, for example, difference in parallax resulting from temperature change or deformation of the fixture caused by external impact. For this reason, the image processing systems are required to perform various types of image processing such as correction processing (misregistration correction processing) for such optical distortion highly precisely. The image processing systems may thus include expensive hardware (processing system) that processes, at high speed, a massive computation amount handled in coordinate transformation in pixel units or other processes. In response, Japanese Patent No. 4769880 discloses an image processing apparatus that employs a recurrence formula in high-order polynomial calculation of a distortion correction amount used in coordinate transformation to reduce a computation amount with the aim of speeding-up with a low-cost method.

Moreover, EP2362345 A2 discloses the use of forward difference calculations of polynomial functions for high-speed and low-complexity geometric transformation of images for distortion correction.

However, a conventional image processing apparatus may adversely affect the image processing precision.

For example, the correction of optical distortion mentioned above needs to be performed speedily to keep high precision of the image processing systems. In the correction of optical distortion, a distortion correction amount used in coordinate transformation is required to be adjusted instantly (required to change the coefficients of the high-order polynomial). However, the distortion correction amount cannot be adjusted instantly (cannot change the coefficients instantly) because the recurrence formula uses a fixed value as an initial value, thereby causing a decrease in the precision.

As described above, the conventional image processing apparatus does not implement image processing with high precision at high speed.

In view of the above, there is a need to provides an image processing apparatus that implements image processing with high precision at high speed.

SUMMARY OF THE INVENTION

It is an object of the present invention to at least partially solve the problems in the conventional technology.

An image processing apparatus includes: an initial value calculating unit that calculates an initial value of a recurrence formula for calculating a coordinate transformation amount in coordinate transformation of an input image per line in a main-scanning direction of the input image; and a coordinate transformation amount calculating unit that calculates the coordinate transformation amount by the recurrence formula using the calculated initial value.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a diagram illustrating a configuration example of an image processing system according to an embodiment;
FIG. 2 is a diagram illustrating a configuration example of an image processing apparatus according to the embodiment;
FIG. 3 is a diagram illustrating a configuration example of a coordinate calculating unit according to the embodiment;
FIG. 4 is a diagram illustrating an operation example of an initial value calculating unit and a recurrence formula calculating unit according to the embodiment;
FIG. 5 is a diagram illustrating a configuration example of an image processing system according to a first modification of the present invention;
FIG. 6 is a diagram illustrating a configuration example of an image processing apparatus according to the first modification; and

FIG. 7 is a diagram illustrating a configuration example of a coordinate calculating unit according to the first modification.

## DETAILED DESCRIPTION OF THE PREFERRED EMBODIMENTS

The embodiments of an image processing apparatus of the present invention are described with reference to the accompanying drawings.

## First Embodiment

## System Configuration

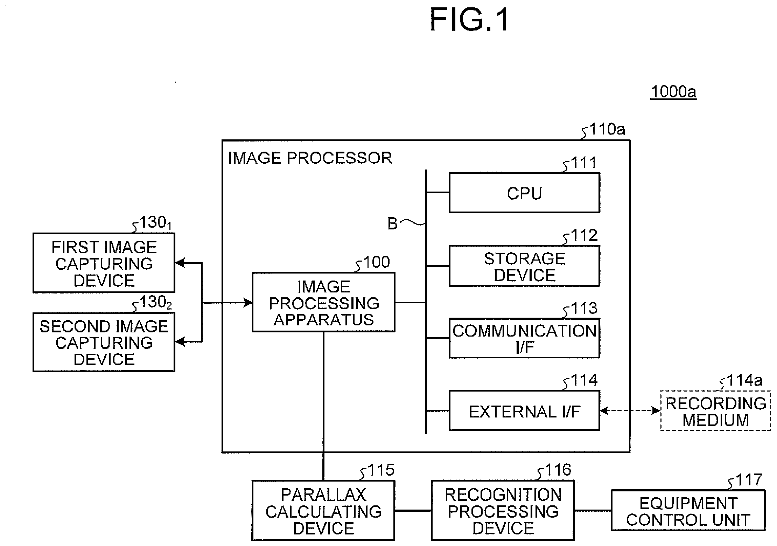

FIG. 1 is a diagram illustrating a configuration example of an image processing system 1000a according to a first embodiment of the present invention. The image processing system 1000a illustrated in FIG. 1 is a stereo camera system including two image capturing devices.

As illustrated in FIG. 1, the image processing system 1000a according to the present embodiment includes a first image capturing device $130_1$, a second image capturing device $130_2$, an image processor 110a, a parallax calculating device 115, a recognition processing device 116, and an equipment control unit 117.

The first image capturing device $130_1$ and the second image capturing device $130_2$ are cameras capturing images of a subject and are identical in configuration, resolution, and the like. The image processor 110a includes an image processing apparatus 100, a central processing unit (CPU) 111, a storage device 112, a communication interface (I/F) 113, and an external I/F 114 that are mutually connected through a bus B. The image processing apparatus 100 includes an image processing circuit such as an application specific integrated circuit (ASIC) and performs predetermined image processing on images captured by and input from the first image capturing device $130_1$ and the second image capturing device $130_2$ to output the processed image. The image processing includes distortion correction processing.

The CPU 111 is an arithmetic unit that reads computer programs and data into a memory (random access memory (RAM)) to perform processing, thus controls the whole system and implements the installed functions. The storage device 112 is a device that holds computer programs and data in given storage regions. Examples of the storage device 112 include a RAM that is a volatile semiconductor memory, a read only memory (ROM) that is a nonvolatile semiconductor memory, and a hard disk drive (HDD) that is a mass-storage device.

The external I/F 114 is an interface with an external device. Examples of the external device include a recording medium 114a. The external I/F 114 enables the image processing system 1000a to read from and/or write in the recording medium 114a. Examples of the recording medium 114a include a flexible disk, a compact disc (CD), a digital versatile disc (DVD), and a memory card. The communication I/F 113 is an interface that connects the image processing system 1000a to a given data transmission line. The communication I/F 113 enables the image processing system 1000a to perform data communication with other equipment. The data transmission line is, for example, a network and employs any connection method such as wired or wireless connection and any communication method such as a communication protocol.

The parallax calculating device 115 calculates a parallax of two images (two pieces of input image data) that are taken by the first image capturing device $130_1$ and the second image capturing device $130_2$ and on which the image processor 110a performs distortion correction processing or similar processing, and outputs the calculated parallax to the recognition processing device 116. The recognition processing device 116 performs recognition processing such as recognition of a subject and recognition of the distance to a subject on the basis of the parallax input from the parallax calculating device 115 and outputs the result of the recognition processing to the equipment control unit 117. The equipment control unit 117 controls the operation of equipment (not shown) on the basis of the result of the recognition processing input from the recognition processing device 116.

With such a configuration, the image processing system 1000a according to the present embodiment can capture images from two points, perform correction processing of the two images, calculate the parallax between the two images, perform recognition processing on the basis of the parallax, control the operation of equipment on the basis of the result of the recognition processing, and perform other processes.

## Configuration of Image Processing Apparatus

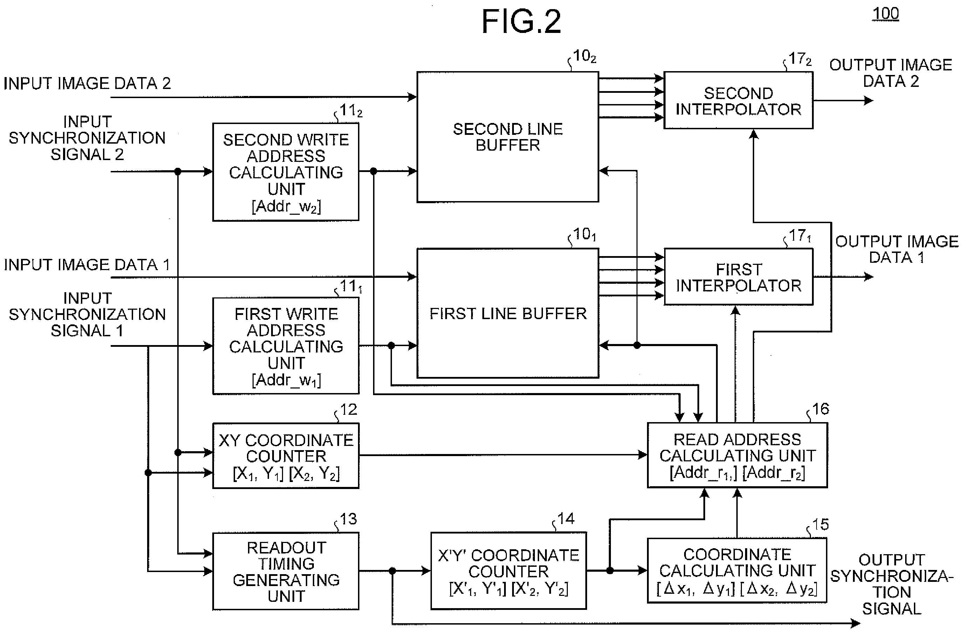

FIG. 2 is a diagram illustrating a configuration example of the image processing apparatus 100 according to the present embodiment. FIG. 2 illustrates the configuration example of the image processing apparatus 100 corresponding to a stereo camera system. As illustrated in FIG. 2, the image processing apparatus 100 according to the present embodiment includes a first line buffer $10_1$ and a second line buffer $10_2$ so as to correspond to the first image capturing device $130_1$ and the second image capturing device $130_2$, respectively. The image processing apparatus 100 according to the present embodiment includes a first write address calculating unit $11_1$ and a second write address calculating unit $11_2$. The image processing apparatus 100 according to the present embodiment further includes a first interpolator $17_1$ and a second interpolator $17_2$.

The image processing apparatus 100 according to the present embodiment also includes an XY coordinate counter 12, a readout timing generating unit 13, an X'Y' coordinate counter 14, a coordinate calculating unit 15, and a read address calculating unit 16. In the image processing apparatus 100 according to the present embodiment, the components mentioned above are mutually connected in the circuit.

The first line buffer $10_1$ and the second line buffer $10_2$ are memories that temporally hold a certain amount of input image data (input image signals) 1, 2 input from the first image capturing device $130_1$ and the second image capturing device $130_2$. The first line buffer $10_1$ and the second line buffer $10_2$ are collectively called a line buffer 10.

The first write address calculating unit $11_1$ and the second write address calculating unit $11_2$ increment write addresses on the basis of input synchronization signals 1, 2. The first write address calculating unit $11_1$ and the second write address calculating unit $11_2$ designate write addresses [Addr_$w_1$], [Addr_$w_2$] used for writing the input image data 1, 2 into the line buffer 10, respectively. The first write address calculating unit $11_1$ and the second write address calculating unit $11_2$ are collectively called a write address calculating unit 11. The write addresses [Addr_$w_1$], [Addr_$w_2$] are collectively called a write address [Addr_w]. The write address calculating unit 11 transmits the calculated write address [Addr_w] to the line buffer 10 and the read address calculating unit 16.

Data that has been held a certain amount of data before is overwritten in the line buffer 10 on the basis of write address designation from the write address calculating unit 11. The line buffer 10 is thus used like a ring buffer.

The XY coordinate counter 12 determines pixels in image spaces on the input side to which the pixels of the respective input image data 1, 2 currently input correspond, on the basis of the input synchronization signals 1, 2. More precisely, the XY coordinate counter 12 calculates coordinate values $[X_1, Y_1]$, $[X_2, Y_2]$ of the pixels in writing on the input side. The coordinate values $[X_1, Y_1]$, $[X_2, Y_2]$ of the pixels in writing on the input side are collectively called coordinate values [X, Y] of the pixels in writing on the input side. The XY coordinate counter 12 transmits the calculated coordinate values [X, Y] of the pixels in writing on the input side to the read address calculating unit 16.

The readout timing generating unit 13 generates an output synchronization signal for delaying image data readout while a certain amount of the input image data 1 and the input image data 2 is written into the first line buffer $10_1$ and the second line buffer $10_2$, respectively. The readout timing generating unit 13 generates the output synchronization signal on the basis of the input synchronization signals 1, 2.

The X'Y' coordinate counter 14 determines pixels in image spaces on the output side to which the pixels of the respective input image data 1, 2 currently input correspond, on the basis of the input synchronization signals 1, 2 input via the readout timing generating unit 13. More precisely, the X'Y' coordinate counter 14 calculates coordinate values $[X'_1, Y'_1]$, $[X'_2, Y'_2]$ of the pixels in reading on the output side. The coordinate values $[X'_1, Y'_1]$, $[X'_2, Y'_2]$ of the pixels in reading on the output side are collectively called coordinate values [X', Y'] of the pixels in reading on the output side. The X'Y' coordinate counter 14 transmits the calculated coordinate values [X', Y'] of the pixels in reading on the output side to the coordinate calculating unit 15 and the read address calculating unit 16.

The coordinate calculating unit 15 performs coordinate transformation processing in pixel units by a high-order polynomial. The coordinate calculating unit 15 calculates coordinate moving amounts $[\Delta x_1, \Delta y_1]$, $[\Delta x_2, \Delta y_2]$ of the coordinate values on the input side (the coordinate values before coordinate transformation) to the coordinate values on the output side (the coordinate values after coordinate transformation). In other words, the coordinate calculating unit 15 calculates coordinate transformation amounts in the coordinate transformation for correcting the aforementioned distortion. The coordinate moving amounts $[\Delta x_1, \Delta y_1]$, $[\Delta x_2, \Delta y_2]$ are collectively called coordinate moving amounts $[\Delta x, \Delta y]$. The coordinate calculating unit 15 transfers the calculated coordinate moving amounts $[\Delta x, \Delta y]$ to the read address calculating unit 16.

The read address calculating unit 16 calculates read addresses [Addr_$r_1$], [Addr_$r_2$] of the first line buffer $10_1$ and the second line buffer $10_2$. The read addresses [Addr_$r_1$], [Addr_$r_2$] are collectively called a read address [Addr_r]. In this calculation, the read address calculating unit 16 calculates the read address [Addr_r] of the line buffer 10 on the basis of the coordinate values [X, Y] of the pixels in writing on the input side, the coordinate values [X', Y'] of the pixels in reading on the output side, and the coordinate moving amounts $[\Delta x, \Delta y]$ from the coordinate before coordinate transformation. The read address calculating unit 16 according to the present embodiment uses the formula (formula 1) below for calculating the read address [Addr_r]:

$$\text{Addr\_r} = \text{Addr\_w} - (Y - Y' + \Delta y) \times \text{Linepix} - (X - X' + \Delta x)$$

$$\cdots \text{ (formula 1)},$$

where Addr_r denotes a read address, Addr_w denotes a write address,

X and Y denote coordinate values of pixels in writing on the input side, X' and Y' denote coordinate values of pixels in reading on the output side,

$\Delta x$ and $\Delta y$ denote coordinate moving amounts from coordinate before coordinate transformation, and

Linepix denotes the number of pixels in one line (pixel number).

The calculated read address [Addr_r] is transferred to the line buffer 10, the first interpolator $17_1$, and the second interpolator $17_2$.

The first interpolator $17_1$ and the second interpolator $17_2$ read the input image data 1, 2 held by the respective line buffers 10 in pixel units and perform image filtering processing such as interpolation on the readout pixels. The first interpolator $17_1$ and the second interpolator $17_2$ according to the present embodiment employ bilinear interpolation in the interpolation. In the bilinear interpolation, the first interpolator $17_1$ and the second interpolator $17_2$ designate the address of a pixel at the upper left pixel of four pixels required for the bilinear interpolation as readout pixel coordinates. The first interpolator 171 and the second interpolator 172 are collectively called an interpolator 17.

In such a manner, the interpolator 17 according to the present embodiment outputs output image data 1, 2 subjected to the image filtering processing.

With the configuration described above, the image processing apparatus 100 according to the present embodiment can perform high precision image processing on input images from the first image capturing device 1301 and the second image capturing device 1302 and can implement an image processing function to output high quality images.

Image Processing Function

The image processing function according to the present embodiment will be described. The image processing apparatus 100 according to the present embodiment calculates initial values to be used in recurrence formulae, by a high-order polynomial in which the coefficients are changed depending on the correction ratio in image correction (the extent to which an image is corrected) per line in the main-scanning direction of an input image. The image processing apparatus 100 according to the present embodiment calculates coordinate transformation amounts (coordinate moving amounts) in coordinate transformation by the recurrence formulae using the calculated values as the initial values. The image processing apparatus 100 according to the present embodiment has such an image processing function.

Stereo cameras can measure the distance from an object, images of which are captured, using the parallax between right and left images, for example. In such stereo cameras, left and right pixels corresponding to each other need to match with each other in order to measure the distance accurately. However, the value of the parallax varies even when the first image capturing device 1301 and the second image capturing device 1302 are different only in temperature, for example, because the stereo cameras employ right and left lenses independent from each other. There may be a case where a fixture fixing the first image capturing device 1301 and the second image capturing device 1302 is deformed due to temperature change or external impact, causing misregistration between the first image capturing device 1301 and the second image capturing device 1302. An error of a few pixels occurs between the corresponding pixels for measuring the distance in the stereo cameras due to such causes.

The image processing function according to the present embodiment uses a method of calculating the initial values of the recurrence formulae for calculating the coordinate transformation amounts in coordinate transformation, by changing the coefficients of the high-order polynomial depending on the correction ratio in image correction, per line in the main-scanning direction of the input image.

The image processing function according to the present embodiment provide environment in which image correction according to temperature change, external impact, or other situations can be instantly performed and the correction can be reflected to the output image with this method. This enables the image processing apparatus 100 according to the present embodiment to implement image processing with high precision at high speed.

The configuration of the image processing function according to the present embodiment and its operation will be described. The image processing function according to the present embodiment is implemented by the coordinate calculating unit 15 performing coordinate transformation processing.

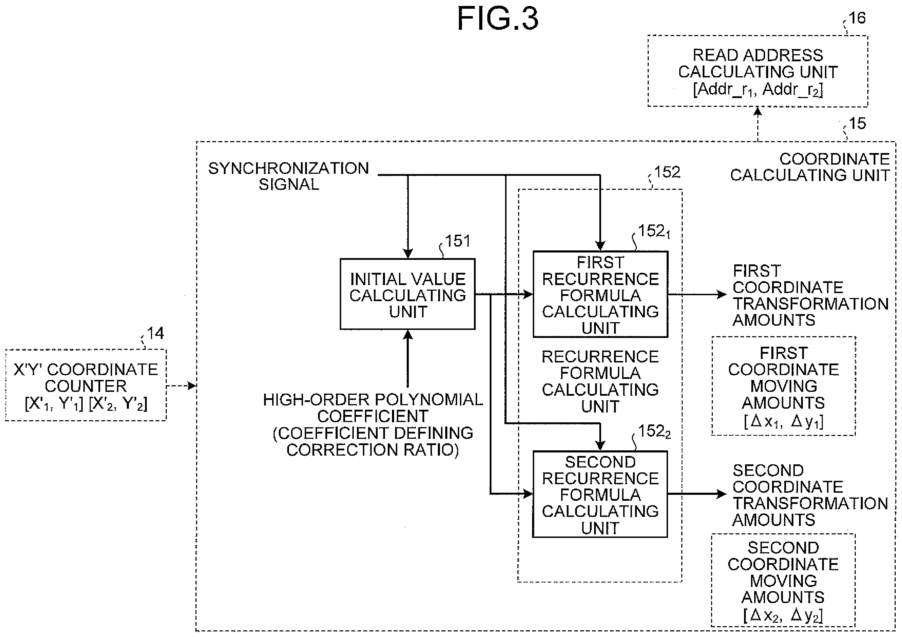

FIG. 3 is a diagram illustrating a configuration example of the coordinate calculating unit 15 according to the present embodiment. FIG. 3 illustrates the configuration example of the coordinate calculating unit 15 corresponding to a stereo camera. As illustrated in FIG. 3, the coordinate calculating unit 15 according to the present embodiment includes an initial value calculating unit 151 and a recurrence formula calculating unit (coordinate transformation amount calculating unit) 152.

The initial value calculating unit 151 calculates initial values to be used in the recurrence formulae, by a high-order polynomial in which the coefficients (the coefficients for image correction) are changed depending on the correction ratio in image correction, per line in the main-scanning direction of the input image on the basis of a synchronization signal. The initial value calculating unit 151 calculates the initial values in the following manner.

The initial value calculating unit 151 determines the correction amounts (coordinate transformation amounts) of the leftmost three pixels (X=1, 2, 3) on the line (main-scanning line) of the X coordinate axis (main-scanning direction) corresponding to the current Y coordinate value, by the high-order polynomial (formula 2) below with coefficients that define the correction ratio in image correction:

$$f(X) = cx(3) \times X^2 + cx(4) \times X \times Y + cx(5) \times Y^2 + cx(1) \times X + cx(2) \times Y + cx(0) \cdots (formula\ 2),$$

where X denotes an X coordinate value, Y denotes a Y coordinate value, and
cx(0) to cx(5) denote high-order polynomial coefficients in the X direction (coefficients that define the correction ratio in image correction).

The initial value calculating unit 151 then determines the initial values (initial values at the current Y coordinate) of the recurrence formulae, by the formulae (formulae 3 to 5) below using each of the determined correction amounts [f(1), f(2), f(3)] of the three pixels:

$$d0(1) = f(1) \cdots (formula\ 3),$$

$$d1(1) = f(2) - f(1) \cdots (formula\ 4),$$

$$d2 = f(3) - 2 \times f(2) + f(1) \cdots (formula\ 5),$$

where d0(1), d1(1), and d2 denote initial values of the recurrence formulae.
In this way, the initial value calculating unit 151 according to the present embodiment changes the coefficients of the high-order polynomial depending on the correction ratio in image correction. The initial value calculating unit 151 determines respective correction amounts of the three pixels by the high-order polynomial (formula 2) in which the coefficients are changed. The initial value calculating unit 151 then determines the initial values of the recurrence formulae, by the formulae (formulae 3 to 5) using the determined correction amounts of the three pixels.
Although the initial value calculating unit 151 according to the present embodiment is described as an example of using a quadratic polynomial as the high-order polynomial, a similar arithmetic method is applicable also to a higher (cubic or higher)-order polynomial.
The recurrence formula calculating unit 152 calculates the coordinate transformation amounts in coordinate transformation by recurrence formulae using the initial values calculated by the initial value calculating unit 151 on the basis of the synchronization signal.
The recurrence formula calculating unit 152 receives the calculated initial values of the recurrence formulae from the initial value calculating unit 151. The recurrence formula calculating unit 152 temporally holds the received initial values. The recurrence formula calculating unit 152 determines the coordinate transformation amounts (the coordinate transformation amounts at the current Y coordinate) of n pixels on the main-scanning line, for which the initial values have been determined, in the following manner. The recurrence formula calculating unit 152 sequentially determines the coordinate transformation amount of each pixel from the leftmost (the first coordinate) on the line by the recurrence formulae (formulae 6 and 7) below employing Newton's forward difference method:

$$d0(k + 1) = d0(k) + d1(k) \cdots (formula\ 6),$$

$$d1(k + 1) = d1(k) + d2 \cdots (formula\ 7),$$

where d0(k) denotes a coordinate transformation amount,
k (= 1, 2, ... n-1, n) denotes pixels on the line of the X coordinate axis at the current Y coordinate, and
n is the number of pixels on the line of the X coordinate axis (main-scanning direction).

The recurrence formula calculating unit 152 designates a coordinate transformation amount [d0(n)] on the line of the X coordinate axis (main-scanning direction) as the coordinate moving amount [Δx] at the X coordinate n before coordinate transformation.

The recurrence formula calculating unit 152 according to the present embodiment thus determines the coordinate transformation amount in pixel units in order from the first coordinate on the main-scanning line, for which the initial values have been determined, by the recurrence formulae (formulae 6 and 7) using the initial values calculated by the initial value calculating unit 151. The recurrence formula calculating unit 152 designates the determined coordinate transformation amount as the coordinate moving amount from the coordinate before the coordinate transformation.

Depending on the high-order polynomial coefficients used in the calculation of the initial values of the recurrence formulae, the pixel value at the coordinate used in the calculation may be zero (0) or the coordinate used in the calculation may be a coordinate at a position beyond the input image size. In other words, the outside of the effective image range of the image before the coordinate transformation may be referred to. In this case, the following exception processing may be performed. Specifically, the recurrence formula calculating unit 152 may output an error signal to the subsequent stage block (not shown) located at the subsequent stage in the processing, and the subsequent stage block may output zero (0) as the pixel value of the relevant pixel.

The above description provides, as an example, calculation of the initial values of the recurrence formulae and calculation with the recurrence formulae themselves on the basis of the X coordinate axis (one axis) corresponding to the input current Y coordinate value from among the X, Y coordinate axes. The coordinate calculating unit 15 according to the present embodiment further performs calculation processing of the Y coordinate correction amounts corresponding to the input current X coordinate value.

More precisely, the initial value calculating unit 151 and the recurrence formula calculating unit 152 perform the following calculation. The initial value calculating unit 151 determines the correction amounts (coordinate transformation amounts) in the Y direction of the leftmost three pixels (X=1, 2, 3) on the line (main-scanning line) of the X coordinate axis corresponding to the current Y coordinate value, by the high-order polynomial (formula 8) below:

$$fy(X) = cy(3) \times X2 + cy(4) \times X \times Y + cy(5) \times Y2 + cy(1) \times$$
$$X + cy(2) \times Y + cy(0) \cdots (formula\ 8),$$

where X is an X coordinate value, Y is a Y coordinate value, and
cy(0) to cy(5) denote high-order polynomial coefficients in the Y direction (coefficients that define the correction ratio in image correction).

The initial value calculating unit 151 determines the initial values (initial values at the current Y coordinate) of the recurrence formulae, by the formulae (formulae 9 to 11) below using the determined correction amounts of the leftmost three pixels. The recurrence formula calculating unit 152 then sequentially determines the coordinate transformation amount (the coordinate transformation amount in the Y direction at the current X coordinate) of each of n pixels on the main-scanning line for which the initial values have been determined, from the leftmost (the first coordinate) on the line by the recurrence formulae (formulae 12 and 13) below. The recurrence formula calculating unit 152 designates a coordinate transformation amount [d0y(n)] in the Y direction on the line of the X coordinate axis (main-scanning direction) as the coordinate moving amount [Δy] at the X coordinate n before coordinate transformation:

$$d0y(1) = fy(1) \cdots (formula\ 9),$$

$$d1y(1) = fy(2) - fy(1) \cdots (formula\ 10),$$

$$d2y = fy(3) - 2 \times fy(2) + fy(1) \cdots (formula\ 11),$$

where d0y(1), d1y(1), d2y denote initial values of the recurrence formulae in the Y direction,

$$d0y(k + 1) = d0y(k) + d1y(k) \cdots (formula\ 12),$$

$$d1y(k + 1) = d1y(k) + d2y \cdots (formula\ 13),$$

where d0y(k) denotes a coordinate transformation amount,

k (= 1, 2, ... n-1, n) denotes pixels on the line of the X coordinate axis at the current Y coordinate, and

n is the number of pixels on the line of the X coordinate axis (main-scanning direction).

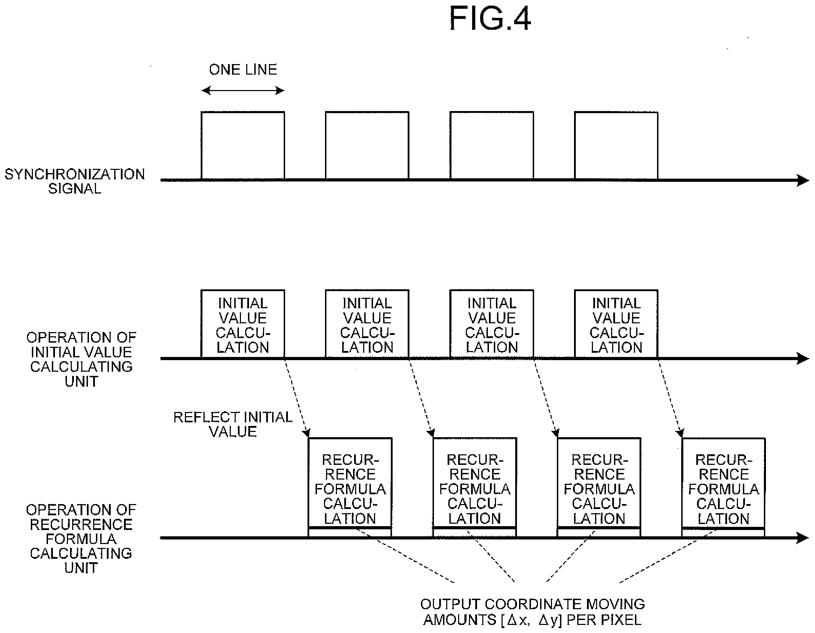

FIG. 4 is a diagram illustrating an operation example of the initial value calculating unit 151 and the recurrence formula calculating unit 152 according to the present embodiment. As illustrated in FIG. 4, the initial value calculating unit 151 calculates the initial values of the recurrence formulae per line in the main-scanning direction in synchronization with the timing of the synchronization signal and transmits the calculated result to the recurrence formula calculating unit 152. The recurrence formula calculating unit 152 calculates the recurrence formulae per pixel using the received calculated result as the initial values of the recurrence formulae. In other words, the recurrence formula calculating unit 152 reflects the initial values calculated depending on the correction ratio in image correction into the calculation of the recurrence formulae. The recurrence formula calculating unit 152 outputs the coordinate transformation amounts resulting from the calculation as the coordinate moving amounts [$\Delta x$, $\Delta y$] (coordinate moving amounts per pixel).

As illustrated in FIG. 4, calculation processing by the initial value calculating unit 151 and calculation processing by the recurrence formula calculating unit 152 are performed in parallel, or performed by pipeline processing, thereby enabling the speed-up of the coordinate transformation processing. More specifically, while the recurrence formula calculating unit 152 determines the coordinate transformation amounts on the m-th line in the sub-scanning direction, the initial value calculating unit 151 determines the initial values of the recurrence formulae on the (m+1)-th line or any of the subsequent lines in the sub-scanning direction. In this case, the calculation processing of the recurrence formulae delays by one line from the calculation processing of the initial values. The calculation processing of the initial values is therefore desirably performed from one line before the image output starts.

This enables the image processing function according to the present embodiment to reflect the correction ratio in image correction to the initial value, which has been a fixed value in the conventional recurrence formula. Further, the image processing function according to the present embodiment can perform image correction at least within two lines (can speed up image correction).

With the configuration described above, the image processing function according to the present embodiment can perform image correction according to temperature change, external impact, or other situations and can reflect the correction to the output image instantly.

Referring back to the description of FIG. 3, the present embodiment describes a stereo camera as an example. The initial value calculating unit 151 therefore calculates the initial values of the recurrence formulae for the respective two input systems (a plurality of input images) corresponding to the first image capturing device 1301 and the second image capturing device 1302. The initial value calculating unit 151 performs sequential processing (sequential calculation) on this calculation of the initial values of the recurrence formulae for respective input systems. The recurrence formula calculating unit 152 also calculates the recurrence formulae for the respective two input systems corresponding to the first image capturing device 1301 and the second image capturing device 1302 like the initial value calculating unit 151. The present embodiment includes a first recurrence formula calculating unit 1521 and a second recurrence formula calculating unit 1522 corresponding to the respective input systems. With this configuration, parallel processing (parallel calculation) is performed in the calculation of the recurrence formulae in the present embodiment. The first recurrence formula calculating unit 1521 and the second recurrence formula calculating unit 1522 output first coordinate transformation amounts and second coordinate transformation amounts corresponding to the input systems, respectively. Specifically, the first recurrence formula calculating unit 1521 outputs the first coordinate transformation amounts resulting from the calculation as the first coordinate moving amounts [$\Delta x$, $\Delta y$]. The second recurrence formula calculating unit 1522 outputs the second coordinate transformation amounts resulting from the calculation as the second coordinate moving amounts [$\Delta x2$, $\Delta y2$].

The present embodiment realizes the aforementioned function of the coordinate calculating unit 15 by the following method. For example, the processing in the initial value calculating unit 151 is complicated because the calculation is based on the formulae including multiplication processing. However, because only calculation processing for three pixels (three times of calculation processing) needs to be performed in the time for one line, there is leeway in calculation time. In contrast, the recurrence formula calculating unit 152 simply performs calculation according to the formulae of addition processing and thus the processing is simple. Although the processing is simple, there is no leeway in the calculation time because the calculation processing is performed for each pixel, and therefore, the speed-up of the processing is required.

From this, the coordinate calculating unit 15 according to the present embodiment desirably implements the function of the initial value calculating unit 151 by executing software such as a computer program and the function of the recurrence formula calculating unit 152 by installing hardware such as a circuit. The program implementing the function of the initial value calculating unit 151 is provided in the following manner. For example, the program is provided by being preinstalled in the storage device 112 such as ROM. The program has a modular construction including the function of the initial value calculating unit 151, and the CPU 111 reads the program from the storage device 112 and executes it to generate a function unit in the RAM. The providing method of the program is not limited to this. For example, a method may be employed in which the program is stored in equipment connected to the Internet or other networks and is downloaded from the network via the communication I/F 113. A providing method may also be employed in which the program is recorded into the recording medium 114a readable by the image processing apparatus 100 that is the execution environment, in an installable format file or an executable format file.

Short Description

In the image processing apparatus 100 according to the present embodiment, the coordinate calculating unit 15 calculates the initial values to be used in the recurrence formulae, by the high-order polynomial in which the coefficients are changed depending on the correction ratio in image correction, per line in the main-scanning direction of the input image. The coordinate calculating unit 15 then calculates the coordinate transformation amounts (coordinate moving amounts) in coordinate transformation by the recurrence formulae using, as the initial values, the values calculated depending on the correction ratio in image correction.

With this configuration, the image processing apparatus 100 according to the present embodiment provides an environment in which image correction can be performed according to temperature change, external impact, or other situations and the correction can be reflected to the output image instantly. This enables the image processing apparatus 100 according to the present embodiment to implement image processing with high precision at high speed.

The configuration example of the image processing apparatus 100 including the interpolator 17 is described in the present embodiment but is not limited to this. The interpolator 17 provides a function necessary for higher image quality. This means if there is no need for the higher image quality, the image processing apparatus 100 does not necessarily include the interpolator 17. In this case, the image processing apparatus 100 may read pixels at coordinates whose decimal places are rounded off and output the pixels as output image data.

The following describes a modification of the image processing apparatus 100 according to the present embodiment. Reference numerals same with the elements identical with the present embodiment are used in the description of the modifications below, and the description is omitted.

First Modification

The example of a stereo camera system is described in the above embodiment but is not limited to this. An image processing system 1000 including a single image capturing device 130 may also be employed, for example.

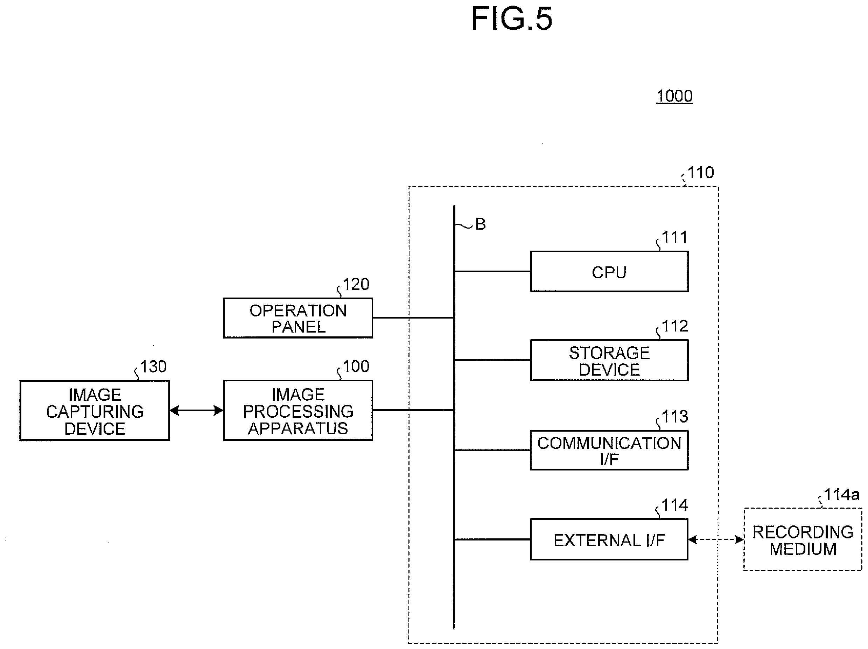

FIG. 5 is a diagram illustrating a configuration example of the image processing system 1000 according to a first modification of the present invention. FIG. 5 illustrates the configuration example of a typical camera system not limited to a stereo camera.

As illustrated in FIG. 5, the image processing system 1000 according to the present embodiment includes a controller 110, an operation panel 120, and the image processing apparatus 100 that are mutually connected through the bus B.

The operation panel 120 includes a display and an input device, provides equipment information or other information to a user, and receives operations such as action setting and an action instruction from the user. The image processing apparatus 100 includes an image processing circuit such as an ASIC and performs predetermined image processing on an image captured by and input from the image capturing device 130 or other devices to output the processed image. The image processing includes distortion correction processing.

The controller 110 includes the CPU 111, the storage device 112, the communication I/F 113, and the external I/F 114 that are mutually connected through the bus B.

The CPU 111 is an arithmetic unit that reads computer programs and data into a RAM to perform processing, thus controls the whole system, and implements the integrated functions. The storage device 112 is a device that holds computer programs and data in given storage regions. Examples of the storage device 112 include a RAM, which is a volatile semiconductor memory, a ROM, which is a nonvolatile semiconductor memory, and an HDD, which is a mass-storage device.

The external I/F 114 is an interface with an external device. Examples of the external device include the recording medium 114a. The external I/F 114 enables the image processing system 1000 to read from and/or write in the recording medium 114a. Examples of the recording medium 114a include a flexible disk, a CD, a DVD, and a memory card. The communication I/F 113 is an interface that connects the image processing system 1000 to a given data transmission line. The communication I/F 113 enables the image processing system 1000 to perform data communication with other equipment. The data transmission line is, for example, a network and employs any connection method such as wired or wireless connection and any communication method such as a communication protocol.

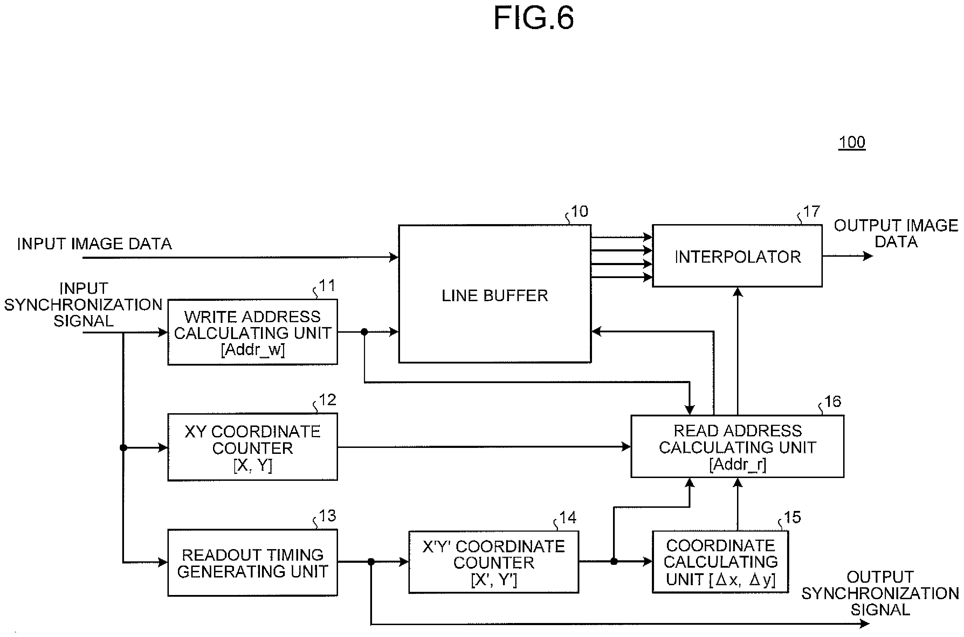

FIG. 6 is a diagram illustrating a configuration example of the image processing apparatus 100 according to the first modification. FIG. 6 illustrates the configuration example of the image processing apparatus 100 of the image processing system 1000 including the single image capturing device 130. The image processing apparatus 100 according to the first modification includes the single line buffer 10, the single write address calculating unit 11, and the single interpolator 17.

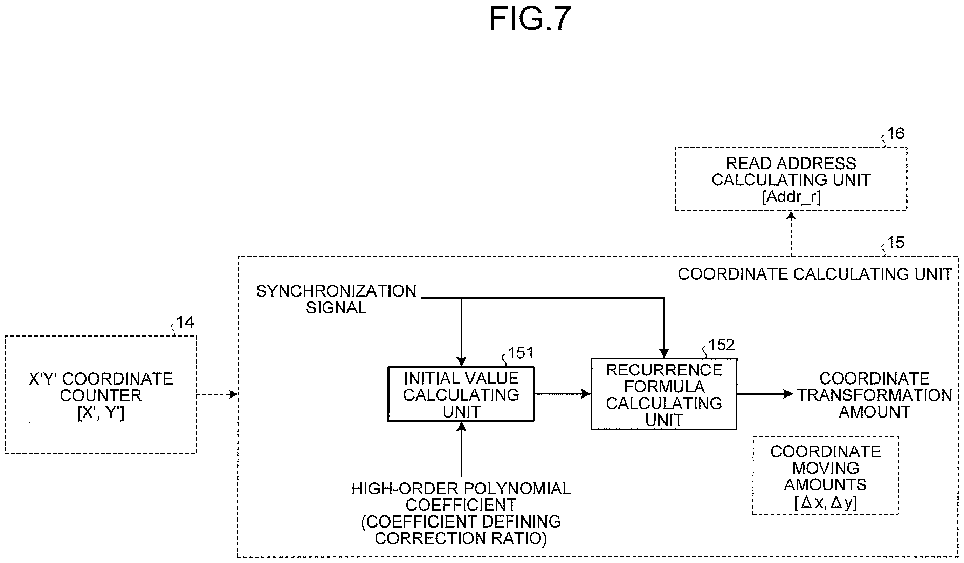

FIG. 7 is a diagram illustrating a configuration example of the coordinate calculating unit 15 according to the first modification. FIG. 7 illustrates the configuration example of the coordinate calculating unit 15 of the image processing apparatus 100 compatible with a single input system. As illustrated in FIG. 7, the coordinate calculating unit 15 according to the first modification includes the single recurrence formula calculating unit 152.

As described above, the image processing system 1000 including the single image capturing device 130 may have a configuration compatible with the single input system.

The embodiment provides an advantageous effect that image processing with high precision at high speed can be realized.

## Claims

1. An image processing apparatus (100) that calculates coordinate transformation amounts for pixels of an input image for correcting optical distortion, the image processing apparatus (100) comprising:

   an initial value calculating unit (151) that calculates coordinate transformation amounts for the first N+1 pixels per line in a main-scanning direction of the input image using an N-order polynomial with N>1; and
   a coordinate transformation amount calculating unit (152) that calculates the coordinate transformation amount for the remaining pixels of each line by a recurrence formula using the transformation amounts for the first pixels as initial values.

2. The image processing apparatus (100) according to claim 1, wherein calculation processing by the initial value calculating unit (151) and calculation processing by the coordinate transformation amount calculating unit (152) are performed by pipeline processing.

3. The image processing apparatus (100) according to claim 1, wherein while the coordinate transformation amount calculating unit (152) calculates the coordinate transformation amount on an m-th line in a sub-scanning direction, the initial value calculating unit (151) calculates the initial value of the recurrence formula on an (m+1)-th line or any of subsequent lines in the sub-scanning direction.

4. The image processing apparatus (100) according to claim 1, wherein the initial value calculating unit (151) starts calculation of the initial value of the recurrence formula from one line before image output starts.

5. The image processing apparatus (100) according to claim 1, wherein the coordinate transformation amount calculating unit (152) performs exception processing when referring to outside of an effective image range of an image before coordinate transformation.

6. The image processing apparatus (100) according to claim 5, wherein in the exception processing, a pixel value of a relevant pixel is output as zero.

7. The image processing apparatus (100) according to claim 1, wherein the image processing apparatus (100) calculates coordinate transformation amounts for pixels of a plurality of input images input from different image capturing devices ($130_1$, $130_2$).

8. The image processing apparatus (100) according to claim 7, wherein the initial value calculating unit (151) calculates the initial value of the recurrence formula per line in the main-scanning direction of the input image and sequentially calculates the initial values of the recurrence formulas for the respective input images.

9. The image processing apparatus (100) according to claim 7, wherein the coordinate transformation amount calculating unit (152) calculates the coordinate transformation amount per pixel by the recurrence formula using the calculated initial value and calculates the coordinate transformation amounts for the respective input images in parallel.

10. The image processing apparatus (100) according to claim 1, wherein
the initial value calculating unit (151) is implemented in software, and
the coordinate transformation amount calculating unit (152) is implemented in hardware.


**Patentansprüche**

1. Bildverarbeitungsvorrichtung (100), die Koordinatenumwandlungsbeträge für Pixel eines Eingangsbilds zum Korrigieren einer optischen Verzeichnung berechnet, wobei die Bildverarbeitungsvorrichtung (100) umfasst:

eine Anfangswertberechnungseinheit (151), die Koordinatenumwandlungsbeträge für die ersten N + 1 Pixel pro Linie in einer Hauptabtastrichtung des Eingangsbilds unter Verwendung eines Polynoms N-ter Ordnung mit N > 1 berechnet; und
eine Koordinatenumwandlungsbetragsberechnungseinheit (152), die den Koordinatenumwandlungsbetrag für die verbleibenden Pixel jeder Linie durch eine Rekursionsformel unter Verwendung der Umwandlungsbeträge für die ersten Pixel als Anfangswerte berechnet.

2. Bildverarbeitungsvorrichtung (100) nach Anspruch 1, wobei die Berechnungsverarbeitung durch die Anfangswertberechnungseinheit (151) und die Berechnungsverarbeitung durch die Koordinatenumwandlungsbetragsberechnungseinheit (152) durch eine Pipeline-Verarbeitung ausgeführt werden.

3. Bildverarbeitungsvorrichtung (100) nach Anspruch 1, wobei, während die Koordinatenumwandlungsbetragsberechnungseinheit (152) den Koordinatenumwandlungsbetrag auf einer m-ten Linie in einer Unterabtastrichtung berechnet, die Anfangswertberechnungseinheit (151) den Anfangswert der Rekursionsformel auf einer (m + 1)-ten Linie oder einer beliebigen von folgenden Linien in der Unterabtastrichtung berechnet.

4. Bildverarbeitungsvorrichtung (100) nach Anspruch 1, wobei die Anfangswertberechnungseinheit (151) eine Berechnung des Anfangswerts der Rekursionsformel von einer Linie startet, bevor die Bildausgabe startet.

5. Bildverarbeitungsvorrichtung (100) nach Anspruch 1, wobei die Koordinatenumwandlungsbetragsberechnungseinheit (152) eine Ausnahmeverarbeitung ausführt, wenn auf das Äußere eines effektiven Bildbereichs eines Bilds vor der Koordinatenumwandlung Bezug genommen wird.

6. Bildverarbeitungsvorrichtung (100) nach Anspruch 5, wobei in der Ausnahmeverarbeitung ein Pixelwert eines relevanten Pixels als Null ausgegeben wird.

7. Bildverarbeitungsvorrichtung (100) nach Anspruch 1, wobei die Bildverarbeitungsvorrichtung (100) Koordinatenumwandlungsbeträge für Pixel mehrerer Eingangsbilder, die von verschiedenen Bildaufnahmevorrichtung ($130_1$, $130_2$) eingegeben werden, berechnet.

8. Bildverarbeitungsvorrichtung (100) nach Anspruch 7, wobei die Anfangswertberechnungseinheit (151) den Anfangswert der Rekursionsformel pro Linie in der Hauptabtastrichtung des Eingangsbilds berechnet und nacheinander die Anfangswerte der Rekursionsformeln für die jeweiligen Eingangsbilder berechnet.

9. Bildverarbeitungsvorrichtung (100) nach Anspruch 7, wobei die Koordinatenumwandlungsbetragsberechnungseinheit (152) den Koordinatenumwandlungsbetrag pro Pixel durch die Rekursionsformel unter Verwendung des berechneten Anfangswerts berechnet und die Koordinatenumwandlungsbeträge für die jeweiligen Eingangsbilder gleichzeitig berechnet.

10. Bildverarbeitungsvorrichtung (100) nach Anspruch 1, wobei
die Anfangswertberechnungseinheit (151) in Software implementiert ist und
die Koordinatenumwandlungsbetragsberechnungseinheit (152) in Hardware implementiert ist.

## EP 2 752 814 B1

**Revendications**

1. Appareil de traitement d'image (100) qui calcule des quantités de transformation de coordonnées pour des pixels d'une image entrée en vue de corriger une distorsion optique, l'appareil de traitement d'image (100) comprenant :

   une unité de calcul de valeur initiale (151) qui calcule des quantités de transformation de coordonnées pour les premiers pixels N+1 par ligne dans une direction de balayage principal de l'image entrée à l'aide d'un polynôme d'ordre N avec N>1 ; et
   une unité de calcul de quantité de transformation de coordonnées (152) qui calcule la quantité de transformation de coordonnées pour les pixels restants de chaque ligne par une formule de récurrence à l'aide des quantités de transformation pour les premiers pixels en tant que valeurs initiales.

2. Appareil de traitement d'image (100) selon la revendication 1, dans lequel le traitement de calcul par l'unité de calcul de valeur initiale (151) et le traitement de calcul par l'unité de calcul de quantité de transformation de coordonnées (152) sont effectués par le traitement en pipeline.

3. Appareil de traitement d'image (100) selon la revendication 1, dans lequel tandis que l'unité de calcul de quantité de transformation de coordonnées (152) calcule la quantité de transformation de coordonnées d'une $m^{ième}$ ligne dans une direction de balayage secondaire, l'unité de calcul de valeur initiale (151) calcule la valeur initiale de la formule de récurrence d'une $(m+1)^{ième}$ ligne ou d'une quelconque des lignes suivantes dans la direction de balayage secondaire.

4. Appareil de traitement d'image (100) selon la revendication 1, dans lequel l'unité de calcul de valeur initiale (151) commence le calcul de la valeur initiale de la formule de récurrence à partir d'une ligne avant que la sortie d'image ne commence.

5. Appareil de traitement d'image (100) selon la revendication 1, dans lequel l'unité de calcul de quantité de transformation de coordonnées (152) effectue un traitement d'exception lorsqu'il s'agit de l'extérieur d'une plage d'image efficace d'une image avant une transformation de coordonnées.

6. Appareil de traitement d'image (100) selon la revendication 5, dans lequel dans le traitement d'exception, une valeur de pixel d'un pixel pertinent est émise en tant que zéro.

7. Appareil de traitement d'image (100) selon la revendication 1, dans lequel l'appareil de traitement d'image (100) calcule des quantités de transformation de coordonnées pour des pixels d'une pluralité d'images entrées depuis différents dispositifs de capture d'image ($130_1$, $130_2$).

8. Appareil de traitement d'image (100) selon la revendication 7, dans lequel l'unité de calcul de valeur initiale (151) calcule la valeur initiale de la formule de récurrence par ligne dans la direction de balayage principal de l'image entrée et calcule de manière séquentielle les valeurs initiales des formules de récurrence pour les images entrées respectives.

9. Appareil de traitement d'image (100) selon la revendication 7, dans lequel l'unité de calcul de quantité de transformation de coordonnées (152) calcule la quantité de transformation de coordonnées par pixel par la formule de récurrence à l'aide de la valeur initiale calculée et calcule les quantités de transformation de coordonnées pour les images entrées respectives en parallèle.

10. Appareil de traitement d'image (100) selon la revendication 1, dans lequel
   l'unité de calcul de valeur initiale (151) est mise en oeuvre dans un logiciel, et
   l'unité de calcul de quantité de transformation de coordonnées (152) est mise en oeuvre en matériel.

# FIG.1

IMAGE PROCESSOR 110a

CPU 111

STORAGE DEVICE 112

COMMUNICATION I/F 113

EXTERNAL I/F 114

RECORDING MEDIUM 114a

IMAGE PROCESSING APPARATUS 100

FIRST IMAGE CAPTURING DEVICE 130₁

SECOND IMAGE CAPTURING DEVICE 130₂

PARALLAX CALCULATING DEVICE 115

RECOGNITION PROCESSING DEVICE 116

EQUIPMENT CONTROL UNIT 117

1000a

B

EP 2 752 814 B1

# FIG.2

100

INPUT IMAGE DATA 2

INPUT SYNCHRONIZATION SIGNAL 2

SECOND WRITE ADDRESS CALCULATING UNIT [Addr_w$_2$] — 11$_2$

SECOND LINE BUFFER — 10$_2$

SECOND INTERPOLATOR — 17$_2$

OUTPUT IMAGE DATA 2

INPUT IMAGE DATA 1

INPUT SYNCHRONIZATION SIGNAL 1

FIRST WRITE ADDRESS CALCULATING UNIT [Addr_w$_1$] — 11$_1$

FIRST LINE BUFFER — 10$_1$

FIRST INTERPOLATOR — 17$_1$

OUTPUT IMAGE DATA 1

XY COORDINATE COUNTER [X$_1$, Y$_1$] [X$_2$, Y$_2$] — 12

READ ADDRESS CALCULATING UNIT [Addr_r$_1$,] [Addr_r$_2$] — 16

READOUT TIMING GENERATING UNIT — 13

X'Y' COORDINATE COUNTER [X'$_1$, Y'$_1$] [X'$_2$, Y'$_2$] — 14

COORDINATE CALCULATING UNIT [Δx$_1$, Δy$_1$] [Δx$_2$, Δy$_2$] — 15

OUTPUT SYNCHRONIZA-TION SIGNAL

EP 2 752 814 B1

14

# FIG.3

EP 2 752 814 B1

# FIG.4

EP 2 752 814 B1

# FIG.5

EP 2 752 814 B1

# FIG.6

INPUT IMAGE DATA

INPUT SYNCHRONIZATION SIGNAL

**10** LINE BUFFER

**17** INTERPOLATOR

OUTPUT IMAGE DATA

**11** WRITE ADDRESS CALCULATING UNIT [Addr_w]

**12** XY COORDINATE COUNTER [X, Y]

**13** READOUT TIMING GENERATING UNIT

**14** X'Y' COORDINATE COUNTER [X', Y']

**15** COORDINATE CALCULATING UNIT [$\Delta$x, $\Delta$y]

**16** READ ADDRESS CALCULATING UNIT [Addr_r]

OUTPUT SYNCHRONIZATION SIGNAL

100

EP 2 752 814 B1

# FIG.7

EP 2 752 814 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4769880 B
- EP 2362345 A2